# EUROPEAN PATENT SPECIFICATION

(11) **EP 3 246 180 B1**
(45) Date of publication and mention of the grant of the patent: **26.06.2019**
(21) Application number: 16737238.2
(22) Date of filing: 05.01.2016
(51) Int. Cl.: B60C 11/00, B60B 9/04, B60C 7/00, B60C 7/14, B60C 7/24

(54) **NON-PNEUMATIC WHEEL**
LUFTLOSES RAD
ROUE NON PNEUMATIQUE

(30) Priority: 15.01.2015 JP 2015005720
(43) Date of publication of application: 22.11.2017
(73) Proprietor: Bridgestone Corporation, Tokyo 104-8340 (JP)
(72) Inventor: SHOJI, Takanori, Tokyo 104-8340 (JP)
(74) Representative: Oxley, Robin John George
(86) International application number: PCT/JP2016/050091
(87) International publication number: WO 2016/114167

(56) References cited:
- JP-A- S6 018 407
- JP-A- 2012 035 792
- JP-A- 2012 035 792
- JP-A- 2014 091 453
- JP-A- 2014 091 453
- US-A1- 2011 024 008

## Description

### Technical Field

The present invention relates to a non-pneumatic wheel according to the preamble of claim 1, which does not require filling of pressurized air therein upon use thereof.

Priority is claimed on Japanese Patent Application No. 2015-005720, filed on January 15, 2015.

### Background Art

In the related art, a non-pneumatic wheel disclosed in the following Patent Document 1 is known. The non-pneumatic wheel includes an attachment body which is attached to an axle, an outer tube body which surrounds the attachment body from an outside in a wheel radial direction, a plurality of connection members which are disposed between the attachment body and the outer tube body along a wheel peripheral direction and connect the attachment body and the outer tube body, and a cylindrical tread member which is externally mounted on the outer tube body.

### Citation List

### Patent Document

[Patent Document 1] Japanese Unexamined Patent Application, First Publication No. 2014-91453

### Summary of Invention

### Technical Problem

According to the inventor of the present invention, in the non-pneumatic wheel of the related art described above, in a case where the outer tube body and the connection member are integrally formed by injection molding in which the molding material is injected from a connection member side toward an outer tube body side, the strength of the weld formed on the outer tube body is lower than that of the other portion. For example, when a load is applied to the tread member from the road surface and the stress generated in the tread member is transferred to the outer tube body, the outer tube body is likely to be damaged starting from a weld thereof, and thus there is room for improvement in increasing the strength thereof.

The invention has been made in view of the above circumstances, and an object thereof is to improve strength of the non-pneumatic wheel.

### Solution to Problem

In order to solve the above problem, the invention proposes the following means.

According to the present invention, there is provided a non-pneumatic wheel comprising an attachment body that is attachable to an axle, an outer tube body that surrounds the attachment body from an outside in a wheel radial direction; a plurality of connection members that are disposed between the attachment body and the outer tube body along a wheel peripheral direction and directly or indirectly connect the attachment body and the outer tube body to each other, and a cylindrical tread member that is externally mounted on the outer tube body, wherein the outer tube body and the connection members are integrally formed by an injection molding in which a molding material is injected from the connection member side toward the outer tube body side, wherein the tread member includes at least one base rubber portion that is positioned at an inside in the wheel radial direction and a cap rubber portion that is positioned at an outside of the base rubber portion in the wheel radial direction, and wherein the at least one base rubber portion is disposed on an outer peripheral surface of the outer tube body, extending at least along a radial direction of the outer tube body and is positioned between outer end portions of the connection members adjacent to each other in the wheel peripheral direction,
characterised in that rigidity of the base rubber portion is lower than rigidity of the cap rubber portion.

### Advantageous Effects of Invention

According to the non-pneumatic wheel of the present invention, the strength thereof can be improved.

### Brief Description of Drawings

FIG. 1 is a view showing an embodiment of a non-pneumatic wheel according to the invention and a schematic perspective view showing a state where a portion of the non-pneumatic wheel is disassembled.
FIG. 2 is a wheel side view of the non-pneumatic wheel shown in FIG. 1 viewed from an outside of a vehicle body in a wheel width direction.
FIG. 3 is an enlarged view showing a main portion of FIG. 2.
FIG. 4 is a wheel side view of a first divided case body viewed from the outside of the vehicle body in the wheel width direction, or a wheel side view of a second divided case body viewed from the inside of the vehicle body in the wheel width direction, in the non-pneumatic wheels shown in FIG. 1.
FIG. 5 is a side view of a main portion including a ring-shaped body and a tread member viewed from the wheel width direction, in the non-pneumatic wheel shown in FIG. 1, and is a view in which the tread member is limited in cross section.
FIG. 6 is a side view of a main portion including a ring-shaped body and a tread member viewed from the wheel width direction, in another embodiment of the non-pneumatic wheel according to the present invention, and is a view in which the tread member is limited in cross section.
FIG. 7 is an enlarged view showing a main portion of FIG. 5.

### Description of Embodiments

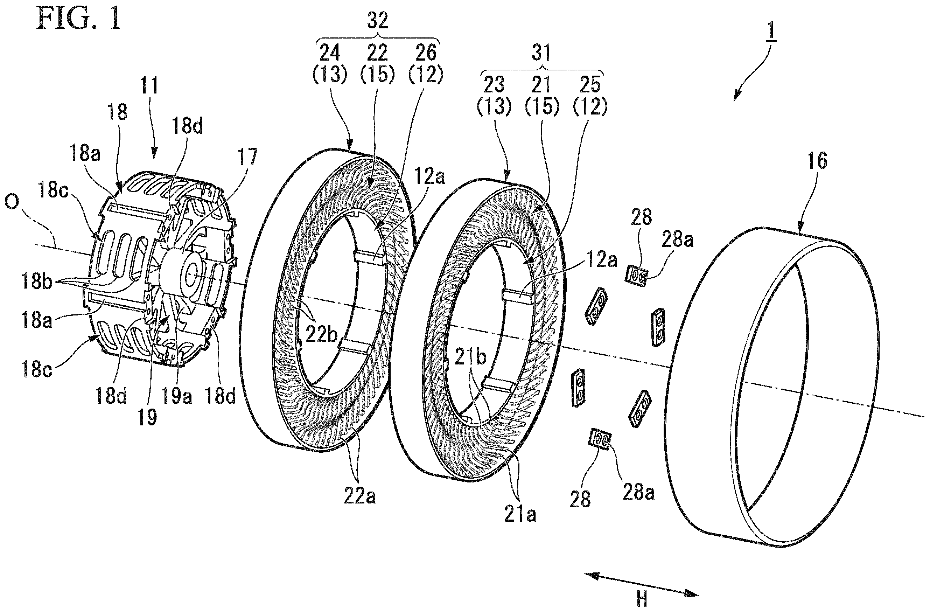

Hereinafter, an embodiment according to the invention will be described with reference to FIG. 1 to FIG. 5.

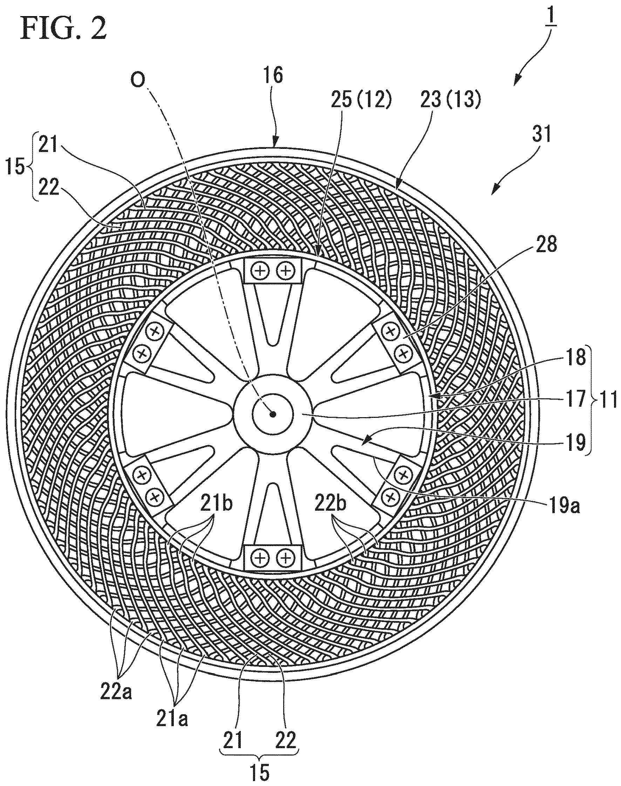

As shown in FIG. 1 and FIG. 2, a non-pneumatic wheel 1 of the present embodiment includes an attachment body 11 which is attachable to an axle (not shown), a cylindrical ring-shaped body 13 (outer tube body) which surrounds the attachment body 11 from an outside in a wheel radial direction, a plurality of connection members 15 which are disposed between the attachment body 11 and the ring-shaped body 13 along a wheel peripheral direction and connect the attachment body 11 and the ring-shaped body 13 to each other to be relatively elastically displaceable, and a cylindrical tread member 16 which is externally mounted to the ring-shaped body 13.

The non-pneumatic wheel 1 of the present embodiment may be used for a two-wheeled vehicle such as a bicycle or the like, may drive in a state of being a camber angle of about 30 degrees, and may be adapted for small vehicles or the like which is defined in Japanese Industrial Standard JIS T 9208 and is driven at a low speed such as a handle type electric wheelchair. In addition, the size of the non-pneumatic wheel 1 is not particularly limited, but may be 3.00 to 8 or the like, for example. In addition, the non-pneumatic wheel 1 may be used for a passenger car. The size, in this case, is not particularly limited, and it may also be, for example, 155/65R13 or the like.

The attachment body 11, the ring-shaped body 13, and the tread member 16 described above are disposed coaxially with a common shaft, respectively. Hereinafter, this common axis is referred to as an axis O, a direction along the axis O is referred to as the wheel width direction H, a direction orthogonal to the axis O is referred to as the wheel radial direction, and a direction orbiting around the axis O is referred to as a wheel peripheral direction. The attachment body 11, the ring-shaped body 13, and the tread member 16 are disposed in a state where center portions thereof in the wheel width direction H are coincident with each other. In addition, the outer diameter of the ring-shaped body 13 is equal regardless of the position in the wheel peripheral direction.

The attachment body 11 includes a mounting tube portion 17 on which a tip portion of the axle is mounted, an outer ring portion 18 which surrounds the mounting tube portion 17 from the outside in the wheel radial direction, and a plurality of ribs 19 which connects the mounting tube portion 17 and the outer ring portion 18 to each other.

The mounting tube portion 17, the outer ring portion 18, and the ribs 19 are integrally formed of a metal material such as an aluminum alloy, for example. The mounting tube portion 17 and the outer ring portion 18 are respectively formed in a cylindrical shape and are disposed coaxially with an axis line O. The plurality of ribs 19 are disposed at an equal interval in the peripheral direction, for example.

On the outer peripheral surface of the outer ring portion 18, a plurality of key groove portions 18a which is depressed inward in the wheel radial direction and extends in the wheel width direction H are formed at intervals in the wheel peripheral direction. The key groove portion 18a is open only on the outer side (a first side) of the vehicle body in the wheel width direction H on the outer peripheral surface of the outer ring portion 18 and is closed on the inner side (a second side) of the vehicle body in the wheel width direction H.

In the outer ring portion 18, in a portion positioned between the adjacent key groove portions 18a in the wheel peripheral direction, a plurality of lightening holes 18b penetrating the outer ring portion 18 in the wheel radial direction are formed at intervals in the wheel width direction H. A plurality of hole rows 18c formed by the plurality of lightening holes 18b are formed at intervals in the wheel peripheral direction. Similarly, each rib 19 also has a lightening hole 19a penetrating the rib 19 in the wheel width direction H.

A recessed portion 18d into which a plate material 28 having a through hole 28a is fitted is formed at a position corresponding to each of the key groove portions 18a on an edge of the outer side of the vehicle body in the wheel width direction H in the outer ring portion 18. The recessed portion 18d is recessed toward the inner side of the vehicle body in the wheel width direction H. In addition, a female thread portion which communicates with the through hole 28a of the plate material 28 fitted in each of the recessed portions 18d is formed on a wall surface of the wall surfaces defining the recessed portion 18d facing the outer side of the vehicle body in the wheel width direction H.

A plurality of the through holes 28a are formed on the plate material 28 at intervals in the wheel peripheral direction.

Similarly, a plurality of female thread portions are formed on the wall surface of the recessed portion 18d at intervals in the wheel peripheral direction. In the example shown, two through holes 28a and two female threaded portions are formed, but the number thereof is not limited to two.

A cylindrical exterior body 12 is externally fitted to the attachment body 11. A ridge portion 12a protruding inward in the wheel radial direction and extending over the entire length in the wheel width direction H is formed on the inner peripheral surface of the exterior body 12. A plurality of ridge portions 12a are formed at intervals in the wheel peripheral direction on the inner peripheral surface of the exterior body 12 and are fitted respectively in the key groove portions 18a formed on the attachment body 11.

Then, in a state where the ridge portion 12a is fitted in the key groove portion 18a, the exterior body 12 is fixed to the attachment body 11 by a bolt (not shown) being screwed into the female threaded portion through the through hole 28a of the plate material 28 fitted in the recessed portion 18d.

Of the wall surfaces defining the key groove portion 18a, a pair of side wall surfaces opposed to each other in the wheel peripheral direction and the bottom wall surface are formed so as to be orthogonal to each other. In addition, a pair of side wall surfaces rising from the inner peripheral surface of the exterior body 12 and a top wall surface facing inward in the wheel radial direction in the outer surface of the ridge portion 12a are also formed to be orthogonal in the same manner. The sizes of the ridge portion 12a and the key groove portion 18a in the wheel peripheral direction are equal to each other.

With such a configuration, the ridge portion 12a is fitted in the key groove portion 18a with less rattling and high precision.

The connection members 15 connect the outer peripheral surface side of the attachment body 11 and the inner peripheral surface side of the ring-shaped body 13 to each other to be relatively elastically displaceable. In the example shown, the connection members 15 include a plurality of first connection plates 21 and a plurality of second connection plates 22 that connect the outer peripheral surface of the exterior body 12 externally fitted to the attachment body 11 and the inner peripheral surface of the ring-shaped body 13 to each other. Both of the first connection plates 21 and the second connection plates 22 are elastically deformable plate materials.

A plurality of the first connection plates 21 are disposed along the wheel peripheral direction, at a position on the outer side of the vehicle body along the wheel width direction H. A plurality of second connection plates 22 are disposed along the wheel peripheral direction, at a position on the inner side of the vehicle body along the wheel width direction H. In other words, the first connection plate 21 and the second connection plate 22 are disposed spaced apart from each other in the wheel width direction H and a plurality of the first connection plates 21 and the second connection plates 22 are disposed at respective positions along the wheel peripheral direction. For example, 60 first connection plates 21 and 60 second connection plates 22 are provided along the wheel peripheral direction.

The plurality of connection members 15 are disposed separately at positions that are rotationally symmetrical about the axis O between the exterior body 12 and the ring-shaped body 13. In addition, all the connection members 15 have the same shape and the same size to each other, and the lateral width of the connection member 15 along the wheel width direction H is smaller than the lateral width of the ring-shaped body 13 along the wheel width direction H.

The first connection plates 21 adjacent to each other in the wheel peripheral direction are not in contact with each other. Similarly, the second connection plates 22 adjacent to each other in the wheel peripheral direction are also not in contact with each other. In addition, the first connection plates 21 and the second connection plates 22 adjacent to each other in the wheel width direction H are also not in contact with each other. Further, the first connection plates 21 and the second connection plates 22 have the same lateral width and thickness along the wheel width direction H.

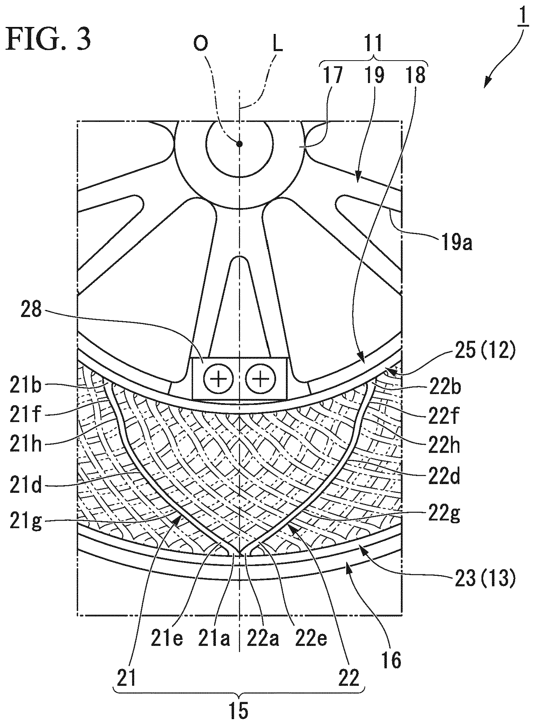

As shown in FIG. 3, the outer end portion (a first end portion) 21a of the first connection plate 21 connected to the ring-shaped body 13 is positioned on a first side of the inner end portion (a second end portion) 21b connected to the exterior body 12 in the wheel peripheral direction. On the other hand, the outer end portion (a first end portion) 22a of the second connection plate 22 connected to the ring-shaped body 13 is positioned on a second side of the inner end portion (the second end portion) 22b connected to the exterior body 12 in the wheel peripheral direction.

Each of the outer end portions 21a and 22a of the first connection plate 21 and the second connection plate 22 constituting one connection member 15 is connected to the same position in the wheel peripheral direction in a state where the positions thereof in the wheel width direction H are different from each other on the inner peripheral surface of the ring-shaped body 13.

In the first connection plate 21 and the second connection plate 22, a plurality of curved portions 21d to 21f and 22d to 22f curved in the wheel peripheral direction are formed on an intermediate portion positioned between the outer end portions 21a and 22a and the inner end portions 21b and 22b.

The plurality of curved portions 21d to 21f and 22d to 22f are formed along the extending direction of the first connection plate 21 and the second connection plate 22 in a wheel side view which is viewed the non-pneumatic wheel 1 from the wheel width direction H. In the example shown, the plurality of curved portions 21d to 21f in the first connection plate 21 and the plurality of curved portions 22d to 22f in the second connection plate 22 are formed such that the first connection plate 21 and the second connection plate 22 are adjacent to each other in an extending direction and the curved directions thereof are opposite to each other.

The plurality of curved portions 21d to 21f formed on the first connection plate 21 include a first curved portion 21d which is curved so as to protrude toward the second side in the wheel peripheral direction, a second curved portion 21e which is positioned between the first curved portion 21d and the outer end portion 21a and is curved so as to protrude toward the first side in the wheel peripheral direction, and a third curved portion 21f which is positioned between the first curved portion 21d and the inner end portion 21b and is curved so as to protrude toward the first side in the wheel peripheral direction. The second curved portion 21e is connected to the outer end portion 21a.

The plurality of curved portions 22d to 22f formed on the second connection plate 22 include a first curved portion 22d which is curved so as to protrude toward the first side in the wheel peripheral direction, a second curved portion 22e which is positioned between the first curved portion 22d and the outer end portion 22a and is curved so as to protrude toward the second side in the wheel peripheral direction, and a third curved portion 22f which is positioned between the first curved portion 22d and the inner end portion 22b and is curved so as to protrude toward the second side in the wheel peripheral direction. The second curved portion 22e is connected to the outer end portion 22a.

In the example shown, the first curved portions 21d and 22d are formed to have a larger curvature radius in a wheel side view than the second curved portions 21e and 22e and the third curved portions 21f and 22f, and are disposed on the center portions in an extending direction of the first connection plate 21 and the second connection plate 22.

The lengths of the first connection plate 21 and the second connection plate 22 are equal to each other. The inner end portions 21b and 22b of the first connection plate 21 and the second connection plate 22 respectively are connected to positions on the outer peripheral surface of the exterior body 12 spaced apart on the first side and the second side by the same distance respectively in the wheel peripheral direction about the axis O from a position facing the outer end portions 21a and 22a in the wheel radial direction on the outer peripheral surface of the exterior body 12.

Specifically, the inner end portions 21b and 22b of the first connection plate 21 and the second connection plate 22 are connected to the outer peripheral surface of the exterior body 12 so that an angle formed between the line connecting the outer end portion 21a and the inner end portion 21b of the first connection plate 21 and the line connecting the outer end portion 22a and the inner end portion 22b of the second connection plate 22 has, for example, an angle between 20° and 135°.

In addition, the first curved portions 21d and 22d, the second curved portions 21e and 22e, and the third curved portions 21f and 22f of the first connection plate 21 and the second connection plate 22 protrude in the opposite direction of the wheel peripheral direction to each other and to the same size, respectively.

With the configuration described above, as shown in Fig 3, the shape of each of the connection members 15 in a wheel side view extends along the wheel radial direction and is line-symmetrical about a virtual line L which passes through each of the outer end portion 21a and 22a of each pair of first connection plate 21 and second connection plate 22 as a symmetrical axis.

The exterior body 12, the ring-shaped body 13, and the plurality of connection members 15 described above are integrally formed of a synthetic resin material, for example. The synthetic resin material may be, for example, only one type of resin material, a mixture containing two or more types of resin materials, or a mixture containing at least one type of resin material and at least one type of elastomer and further, may also include an antioxidant, a plasticizer, a filler, or an additive such as a pigment, for example.

Incidentally, as shown in FIG. 1, the exterior body 12 is divided into a first exterior body 25 positioned on the outer side of the vehicle body in the wheel width direction H and a second exterior body 26 positioned on the inner side of the vehicle body in the wheel width direction H. Similarly, the ring-shaped body 13 is divided into a first ring-shaped body 23 (divided tube) positioned on the outer side of the vehicle body in the wheel width direction H and a second ring-shaped body 24 (divided tube) positioned on the inner side of the vehicle body in the wheel width direction H. In the ring-shaped body 13, the ends of the first and second ring-shaped bodies 23 and 24 (a plurality of divided tubes) in the wheel width direction H disposed adjacent to each other in the wheel width direction H are connected to each other.

In the example shown, the exterior body 12 and the ring-shaped body 13 are divided at the center portion in the wheel width direction H, respectively.

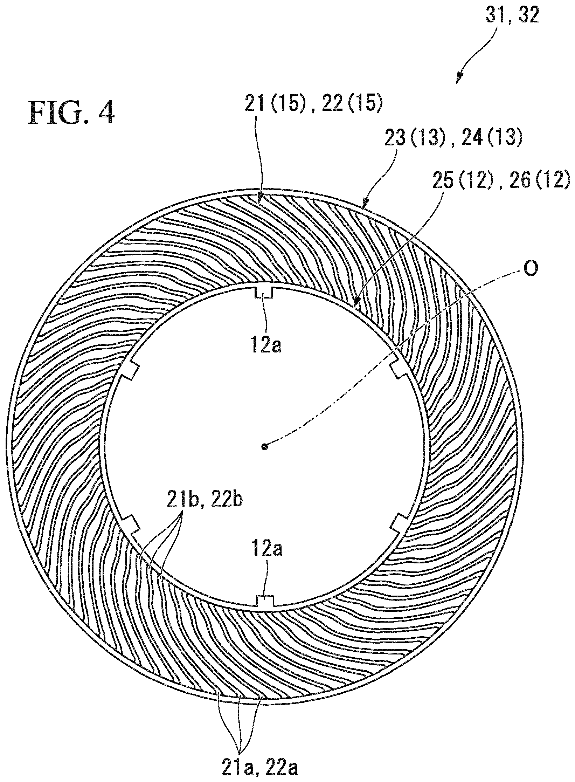

Then, as shown in FIG. 4, the first exterior body 25 and the first ring-shaped body 23 are integrally formed with the first connection plate 21 by injection molding. The second exterior body 26 and the second ring-shaped body 24 are integrally formed with the second connection plate 22 by injection molding.

Hereinafter, a unit in which the first exterior body 25, the first ring-shaped body 23, and the first connection plate 21 are integrally formed is referred to as a first divided case body 31 and a unit in which the second exterior body 26, the second ring-shaped body 24 and the second connection plate 22 are integrally formed is referred to as a second divided case body 32.

Each of the divided case bodies 31 and 32 is integrally formed by injection molding, in which a molding material is injected from the connection member 15 side toward the ring-shaped body 13 side.

As an example, the first divided case body 31, as a mold, includes a cavity that has an inner space for molding the first exterior body 25, an outer space for molding the first ring-shaped body 23, and an intermediate space for molding the first connection plate 21 and a gate to the cavity is configured so as to be connected to the inner space. In this mold, the first divided case body 31 is formed by the molding material being injected from the gate into the cavity and being supplied from the inner space to the outer space through the intermediate space. At this time, in the intermediate space, the molding material which has passed through each portion forming the first connection plate 21 adjacent in the wheel peripheral direction flows so as to approach each other in the wheel peripheral direction in the outer space based on an injection pressure thereof and thus the weld is formed in the portion of the first ring-shaped body 23 interposed in the wheel peripheral direction between the outer end portions 21a of the first connection plates 21 adjacent to each other in the wheel peripheral direction.

These points are also similarly applied to the second divided case body 32.

The edges of the first ring-shaped body 23 and the second ring-shaped body 24 facing in the wheel width direction H are connected to each other, for example, by welding, fusing, adhesion or the like and a joining portion (not shown) which connects the edges of the first and second ring-shaped bodies 23 and 24 in the wheel width direction H to each other is provided on the ring-shaped body 13. In the case of welding, for example, hot plate welding or the like may be performed. Similarly, the first exterior body 25 and the second exterior body 26 are in contact in the edges facing in the wheel width direction H.

However, the first exterior body 25 and the second exterior body 26 may be formed so that the lateral widths thereof along the wheel width direction H is smaller than that of the first ring-shaped body 23 and the second ring-shaped body 24.

In this case, in the first exterior body 25 and the second exterior body 26, when the first divided case body 31 and the second divided case body 32 are connected to each other, the edges facing in the wheel width direction H are spaced apart from each other in the wheel width direction. Therefore, for example, generation of burrs can be prevented on the inner peripheral surface of the exterior body 12 externally fitted to the attachment body 11.

As shown in FIG. 4, the first divided case body 31 and the second divided case body 32 have the same shape and the same size as each other. When the first divided case body 31 and the second divided case body 32 are integrally connected to each other as described above, in order to make each connection member 15 line-symmetrical as seen in a wheel side view, the first divided case body 31 and the second divided case body 32 are aligned with each other in the wheel peripheral direction. In addition, in a state where the directions of the first divided case body 31 and the second divided case body 32 are opposite to each other in the wheel width direction H, the edges of the first ring-shaped body 23 and the second ring-shaped body 24 in the wheel width direction H are collided and connected to each other.

Thereafter, by providing the tread member 16 to the first divided case body 31 and the second divided case body 32 integrally combined with each other, the non-pneumatic wheel 1 can be obtained.

As shown in FIG. 1, the tread member 16 is formed in a cylindrical shape and integrally covers the entire outer peripheral surface side of the ring-shaped body 13. The inner diameter of the tread member 16 is equal over the entire periphery thereof, and the inner peripheral surface of the tread member 16 is in close contact with the outer peripheral surface of the ring-shaped body 13 over the entire area thereof. The inner diameter of the tread member 16 is the distance along the wheel radial direction between the inner peripheral surface of the tread member 16 and the axis O. The outer peripheral surface of the tread member 16 is formed in a perfect circular shape in a cross-sectional view taken along an orthogonal plane orthogonal to the axis O and the outer diameter of the tread member 16 is equal over the entire periphery thereof. The outer diameter of the tread member 16 is the distance along the wheel radial direction between the outer peripheral surface of the tread member 16 and the axis O.

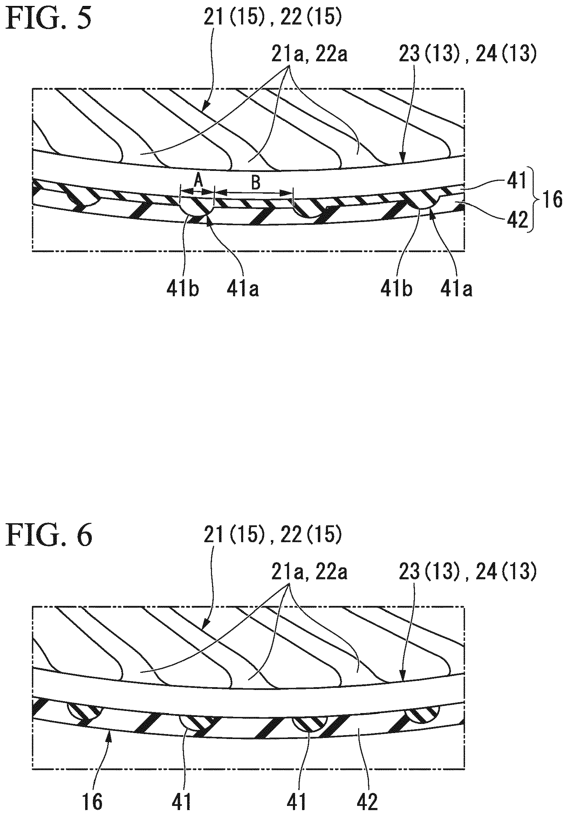

As shown in FIG. 5, the tread member 16 includes a base rubber portion 41 positioned on the inner side in the wheel radial direction and a cap rubber portion 42 positioned outside of the base rubber portion 41 in the wheel radial direction. Both the base rubber portion 41 and the cap rubber portion 42 extend over the entire periphery of the ring-shaped body 13, and the tread member 16 has a two-layer structure of the base rubber portion 41 and the cap rubber portion 42.

The base rubber portion 41 is disposed at least in a portion (portion where weld is formed) positioned between the connection members 15 adjacent in the wheel peripheral direction in the ring-shaped body 13, and in the example shown, as described above extends over the entire periphery of the ring-shaped body 13. A portion (hereinafter referred to as "weld protecting portion") 41a of the base rubber portion 41 positioned between the connection members 15 adjacent to each other in the wheel peripheral direction on the outer peripheral surface of the ring-shaped body 13 is thicker than other portion thereof and is formed to be large in the wheel radial direction. In the present embodiment, the portion of the ring-shaped body 13 positioned between the connection members 15 adjacent to each other in the wheel peripheral direction is a portion of the first ring-shaped body 23 (or second ring-shaped body 24) interposed in the wheel peripheral direction by each outer end portion 21a of the first connection plate 21 (or each outer end portion 22a of the second connection plate 22) adjacent to each other in the wheel peripheral direction.

The weld protecting portion 41a has a curved surface shape that protrudes toward the outside in the wheel radial direction in a cross-sectional view taken along an orthogonal plane orthogonal to the axis O. In the cross-sectional view taken along the orthogonal plane orthogonal to the axis O, the curvature of the outer surface 41b facing the outside in the wheel radial direction in the weld protecting portion 41a is larger than the curvature of the outer peripheral surface of the tread member 16.

The thickness (size in the wheel radial direction) of the excluded portion which is a portion of the base rubber portion 41 other than the weld protecting portion 41a is the same regardless of the position in the wheel peripheral direction.

In addition, when the lateral width in the wheel peripheral direction of the weld protecting portion 41a of the base rubber portion 41 is referred to as A and the distance between the weld protecting portions 41a in the wheel peripheral direction is referred to as B, the distance B between the weld protecting portions 41a is longer than the lateral width A of the weld protecting portion 41a.

The cap rubber portion 42 covers the base rubber portion 41 from the outside to the entire periphery thereof in the wheel radial direction, and the base rubber portion 41 is not exposed to the outside in the wheel radial direction. The outer peripheral surface of the cap rubber portion 42 constitutes the outer peripheral surface of the tread member 16.

Here, the base rubber portion 41 and the cap rubber portion 42 are made of two types of rubbers which are different from each other. The base rubber portion 41 and the cap rubber portion 42 are formed of vulcanized rubber in which natural rubber and/or a rubber composition are vulcanized. The rigidity of the base rubber portion 41 is lower than the rigidity of the cap rubber portion 42. In the present embodiment, the rubber hardness Gb of the base rubber portion 41 is lower than the rubber hardness Gc of the cap rubber portion 42. The rubber hardness Gb of the base rubber portion 41 and the rubber hardness Gc of the cap rubber portion 42 satisfy 30<Gb<Gc<80. The rubber hardness (Japanese Industrial Standard JIS-A hardness) was measured by a durometer A in accordance with Japanese Industrial Standard JIS K 6253. In addition, the elastic modulus Eb of the base rubber portion 41 is lower than the elastic modulus Ec of the cap rubber portion 42. The elastic modulus Eb of the base rubber portion 41 and the elastic modulus Ec of the cap rubber portion 42 satisfy 0.1 MPa<Eb<Ec<100 MPa. The elastic modulus was measured by a tensile tester according to Japanese Industrial Standard JIS K 6254: 2010.

As described above, according to the non-pneumatic wheel 1 according to the present embodiment, since the rigidity of the base rubber portion 41 positioned on the inner side in the wheel radial direction is lower than the rigidity of the cap rubber portion 42 positioned outside in the wheel radial direction, the stress generated in the tread member 16 can be dispersed in the base rubber portion 41 when a load is applied to the tread member 16. Since the base rubber portion 41 is disposed at least in a portion positioned between the connection members 15 adjacent to each other in the wheel peripheral direction in the ring-shaped body 13, by dispersing the stress as described above, the stress transferred from the tread member 16 to the weld can be suppressed.

On the other hand, since the cap rubber portion 42 having high rigidity is positioned outside in the wheel radial direction with respect to the base rubber portion 41 having low rigidity, wear resistance and impact resistance of the tread member 16 can be secured by the cap rubber portion 42 and the driving stability of the non-pneumatic wheel 1 can also be secured.

As described above, while the stress transferred to the weld is suppressed by the base rubber portion 41, the wear resistance, the impact resistance of the tread member 16 can be secured by the cap rubber portion 42 and thus the strength of the non-pneumatic wheel 1 can be improved.

In addition, since the base rubber portion 41 extends over the entire periphery of the outer peripheral surface of the ring-shaped body 13 and the weld protecting portion 41a of the base rubber portion 41 is thicker than the other portions, the stress can be effectively dispersed in a wide range in the weld protecting portion 41a in the wheel peripheral direction.

In addition, since the rubber hardness Gb of the base rubber portion 41 is lower than the rubber hardness Gc of the cap rubber portion 42, stress generated in the tread member 16 can be effectively dispersed in the base rubber portion 41.

Furthermore, since the rubber hardness Gb of the base rubber portion 41 and the rubber hardness Gc of the cap rubber portion 42 satisfy 30<Gb<Gc<80, the stress generated in the tread member 16 can be more effectively dispersed in the base rubber portion 41.

In addition, since the elastic modulus Eb of the base rubber portion 41 is lower than the elastic modulus Ec of the cap rubber portion 42, stress generated in the tread member 16 can be effectively dispersed in the base rubber portion 41.

Furthermore, since the elastic modulus Eb of the base rubber portion 41 and the elastic modulus Ec of the cap rubber portion 42 satisfy 0.1 MPa<Eb<Ec<100 MPa, the stress generated in the tread member 16 ca be more effective dispersed in the base rubber portion 41.

The technical scope of the invention is not limited to the above embodiment, and various modifications can be made without departing from the scope of the invention.

For example, in the present invention, it is also possible to use a non-pneumatic wheel as shown in FIG. 6. In this non-pneumatic wheel, the base rubber portion 41 is disposed only in portions of the ring-shaped body 13 positioned between the connection members 15 adjacent to each other in the wheel peripheral direction. A plurality of the base rubber portions 41 are intermittently disposed in the wheel peripheral direction. Each one of the base rubber portions 41 has a curved surface shape protruding toward the outside in the wheel radial direction in a cross-sectional view taken along an orthogonal plane orthogonal to an axis O.

In the cross-sectional view taken along the orthogonal plane orthogonal to the axis O, the curvature of the outer surface of each one of the base rubber portions 41 facing the outside in the wheel radial direction is larger than the curvature of the outer peripheral surface of the tread member 16.

Furthermore, in the above embodiment, a gap in the wheel width direction H may be provided or may not be provided between the first exterior body 25 and the second exterior body 26. In addition, the exterior body 12 and the ring-shaped body 13 may be divided or may not be divided into three or more in the wheel width direction H.

In addition, the exterior body 12 and the attachment body 11 may be integrally formed. In other words, the exterior body 12 may be included in the attachment body 11.

Furthermore, in the embodiment described above, the connection members 15 are indirectly connected to the attachment body 11 via the exterior body 12, but they are not limited thereto. For example, the connection members 15 may be directly connected to the attachment body 11.

Besides, each configuration (constituent elements) described in the embodiment described above, modification example, and still further writing may be combined with each other without departing from the scope of the invention and in addition, additions, omissions, substitutions, and other changes to the configuration are possible. In addition, the invention is not limited to the embodiments described above and is limited only by the claims.

Next, a verification test on the operational effects described above was carried out.

As an example, the non-pneumatic wheel 1 shown in FIGS. 1 to 5 was used, and as a comparative example, a non-pneumatic wheel in which the tread member 16 has a single layer structure made of the same material as the cap rubber portion 42 is used in the non-pneumatic wheel of the example.

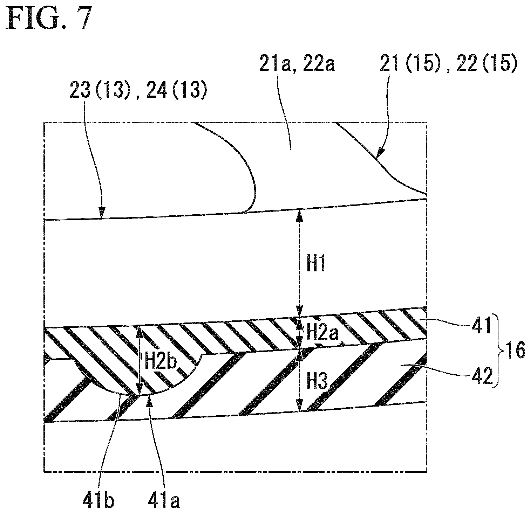

As shown in FIG. 7, the thickness of the ring-shaped body 13 of these non-pneumatic wheels is set to H1, the thickness of the excluded portion of the base rubber portion 41 is set to H2a, the thickness of the weld protecting portion 41a of the base rubber portion 41 is set to H2b and the thickness of the cap rubber portion 42 is set to H3. The thickness H1 of the ring-shaped body 13 is larger than the thickness H2a of the excluded portion of the base rubber portion 41, the thickness H2b of the weld protecting portion 41a of the base rubber portion 41, and the thickness H3 of the cap rubber portion 42, that is, the relationship which is H1>H2a, H2b, H3 is established. Further, the thickness H1 of the ring-shaped body 13 is equal to or larger than the sum of the thickness H2a of the excluded portion of the base rubber portion 41 and the thickness H3 of the cap rubber portion 42 or is equal to or greater than the sum of the thickness H2b of the weld protecting portion 41a of the base rubber portion 41 and the thickness H3 of the cap rubber portion 42, that is, the relationship which is H1≥H2a+H3 or H1≥H2b+H3 is established.

The outer diameters of these non-pneumatic wheels and each dimension of HI, H2a, H2b, and H3 were set to the sizes shown in Table 1 below. The unit of the value described in the second line of Table 1 is mm.

**[Table 1]**

| Wheel Outer Diameter R | H1 | H2a | H2b | H3 |
|---|---|---|---|---|
| 150 | 6 | 2 | 4 | 4 |

| | | | | |
|---|---|---|---|---|
| (unit: mm) | | | | |

The rubber hardness and elastic modulus of the base rubber portion 41 and the cap rubber portion 42 in the non-pneumatic wheel 1 of the example were set to the sizes shown in Table 2 below.

**[Table 2]**

| | Base Rubber Portion | Cap Rubber Portion |
|---|---|---|
| Rubber Hardness | 60 | 65 |
| Elasticity Modulus (MPa) | 35 | 40 |

For these two types of non-pneumatic wheels, the driving distance was measured until the wheel was broken by using a drum tester and driving at 60 km/h in a state where a load of 1000 N is applied.

As a result, it was confirmed that the driving distance was increased by 20% in the non-pneumatic wheel 1 of the example compared to the non-pneumatic wheel of the comparative example,.

### Industrial Applicability

According to the present invention, the strength of the non-pneumatic wheel can be improved.

### Reference Signs List

1 non-pneumatic wheel
11 attachment body
13 ring-shaped body (outer tube body)
15 connection member
16 tread member
41 base rubber portion
42 cap rubber portion

## Claims

1. A non-pneumatic wheel (1) comprising:
an attachment body (11) that is attachable to an axle;
an outer tube body (13) that surrounds the attachment body (11) from an outside in a wheel radial direction;
a plurality of connection members (15) that are disposed between the attachment body (11) and the outer tube body (13) along a wheel peripheral direction and directly or indirectly connect the attachment body (11) and the outer tube body (13) to each other; and
a cylindrical tread member (16) that is externally mounted on the outer tube body (13),
wherein the outer tube body (13) and the connection members (15) are integrally formed by an injection molding in which a molding material is injected from the connection member (15) side toward the outer tube body (13) side,
wherein the tread member (16) includes at least one base rubber portion (41) that is positioned at an inside in the wheel radial direction and a cap rubber portion (42) that is positioned at an outside of the base rubber portion (41) in the wheel radial direction,
and
wherein the at least one base rubber portion (41) is disposed on an outer peripheral surface of the outer tube body (13), extending at least along a radial direction of the outer tube body (13) and is positioned between outer end portions (21a, 22a) of the connection members (15) adjacent to each other in the wheel peripheral direction,
**characterised in that** rigidity of the base rubber portion (41) is lower than rigidity of the cap rubber portion (42).

2. The non-pneumatic wheel (1) according to claim 1,
wherein the base rubber portion (41) extends over the entire periphery of the outer tube body (13), and
wherein at least one portion of the at least one base rubber portion (41), which is positioned on the outer peripheral surface of the outer tube body (13), extends at least along the radial direction of the outer tube body (13) and is positioned between the outer end portions (21a, 22a) of the connection members (15) adjacent to each other in the wheel peripheral direction, is thicker than other portions of the at least one base rubber portion (41).

3. The non-pneumatic wheel (1) according to claim 1,
wherein the rubber hardness Gb of the base rubber portion (41) is lower than the rubber hardness Gc of the cap rubber portion (42).

4. The non-pneumatic wheel (1) according to claim 2,
wherein the rubber hardness Gb of the base rubber portion (41) is lower than the rubber hardness Gc of the cap rubber portion (42).

5. The non-pneumatic wheel (1) according to claim 3,
wherein the rubber hardness Gb of the base rubber portion (41) and the rubber hardness Gc of the cap rubber portion (42) satisfy 30<Gb<Gc<80.

6. The non-pneumatic wheel (1) according to claim 4,
wherein the rubber hardness Gb of the base rubber portion (41) and the rubber hardness Gc of the cap rubber portion (42) satisfy 30<Gb<Gc<80.

7. The non-pneumatic wheel (1) according to any one of claims 1 to 6,
wherein the elastic modulus Eb of the base rubber portion (41) is lower than the elastic modulus Ec of the cap rubber portion (42).

8. The non-pneumatic wheel (1) according to claim 7,
wherein the elastic modulus Eb of the base rubber portion (41) and the elastic modulus Ec of the cap rubber portion (42) satisfy 0.1 MPa<Eb<Ec<100 MPa.

## Patentansprüche

1. Luftloses Rad (1), das Folgendes umfasst:
einen Befestigungskörper (11), der an einer Achse befestigt werden kann,
einen äußeren Röhrenkörper (13), der den Befestigungskörper (11) in einer Radradialrichtung von außen umgibt,
mehrere Verbindungselemente (15), die zwischen dem Befestigungskörper (11) und dem äußeren Röhrenkörper (13) entlang einer Radumfangsrichtung angeordnet sind und den Befestigungskörper (11) und den äußeren Röhrenkörper (13) unmittelbar oder mittelbar miteinander verbinden, und
ein zylindrisches Laufflächenelement (16), das außen an dem Befestigungskörper (11) angebracht ist,
wobei der äußere Röhrenkörper (13) und die Verbindungselemente (15) integral geformt sind durch ein Spritzgießen, bei dem ein Formungsmaterial von der Seite der Verbindungselemente (15) zu der Seite des äußeren Röhrenkörpers (13) hin eingespritzt wird,
wobei das Laufflächenelement (16) wenigstens einen Basisgummiabschnitt (41), der auf einer Innenseite in der Radradialrichtung angeordnet ist, und einen Deckgummiabschnitt (42), der an einer Außenseite des Basisgummiabschnitts (41) in der Radradialrichtung angeordnet ist, einschließt,
und
wobei der wenigstens eine Basisgummiabschnitt (41) an einer äußeren Umfangsfläche des äußeren Röhrenkörpers (13) angeordnet ist, wobei er sich wenigstens entlang einer radialen Richtung des äußeren Röhrenkörpers (13) erstreckt und zwischen äußeren Endabschnitten (21a, 22a) der Verbindungselemente (15), die einander in der Radumfangsrichtung benachbart sind, angeordnet ist,
**dadurch gekennzeichnet, dass** eine Steifigkeit des Basisgummiabschnitts (41) niedriger ist als eine Steifigkeit des Deckgummiabschnitts (42).

2. Luftloses Rad (1) nach Anspruch 1,
wobei sich der Basisgummiabschnitt (41) über den gesamten Umfang des äußeren Röhrenkörpers (13) erstreckt und
wobei wenigstens ein Abschnitt des wenigstens einen Basisgummiabschnitts (41), der an der äußeren Umfangsfläche des äußeren Röhrenkörpers (13) angeordnet ist, sich wenigstens entlang der Radialrichtung des äußeren Röhrenkörpers (13) erstreckt und zwischen den äußeren Endabschnitten (21a, 22a) der Verbindungselemente (15), die einander in der Radumfangsrichtung benachbart sind, angeordnet ist, dicker ist als andere Abschnitte des wenigstens einen Basisgummiabschnitts (41).

3. Luftloses Rad (1) nach Anspruch 1,
wobei die Gummihärte Gb des Basisgummiabschnitts (41) niedriger ist als die Gummihärte Gc des Deckgummiabschnitts (42).

4. Luftloses Rad (1) nach Anspruch 2,
wobei die Gummihärte Gb des Basisgummiabschnitts (41) niedriger ist als die Gummihärte Gc des Deckgummiabschnitts (42).

5. Luftloses Rad (1) nach Anspruch 3,
wobei die Gummihärte Gb des Basisgummiabschnitts (41) und die Gummihärte Gc des Deckgummiabschnitts (42) 30 < Gb < Gc < 80 erfüllen.

6. Luftloses Rad (1) nach Anspruch 4,
wobei die Gummihärte Gb des Basisgummiabschnitts (41) und die Gummihärte Gc des Deckgummiabschnitts (42) 30 < Gb < Gc < 80 erfüllen.

7. Luftloses Rad (1) nach einem der Ansprüche 1 bis 6,
wobei der Elastizitätsmodul Eb des Basisgummiabschnitts (41) niedriger ist als der Elastizitätsmodul Ec des Deckgummiabschnitts (42).

8. Luftloses Rad (1) nach Anspruch 7,
wobei der Elastizitätsmodul Eb des Basisgummiabschnitts (41) und der Elastizitätsmodul Ec des Deckgummiabschnitts (42) 0,1 MPa < Eb < Ec < 100 MPa erfüllen.

## Revendications

1. Roue non pneumatique (1), comprenant :
un corps de fixation (11) pouvant être fixé sur un essieu ;
un corps tubulaire externe (13) entourant le corps de fixation (11) à partir d'un côté externe, dans une direction radiale de la roue ;
plusieurs éléments de raccordement (15) disposés entre le corps de fixation (11) et le corps tubulaire externe (13), le long d'une direction périphérique de la roue, et raccordant, de manière directe ou indirecte, le corps de fixation (11) et le corps tubulaire externe (13) l'un à l'autre ; et
un élément de bande de roulement cylindrique (16) monté de l'extérieur sur le corps tubulaire externe (13) ;
dans laquelle le corps tubulaire externe (13) et les éléments de raccordement (15) sont formés d'une seule pièce par moulage par injection, dans lequel un matériau de moulage est injecté, du côté des éléments de raccordement (15) vers le côté du corps tubulaire externe (13) ;
dans laquelle l'élément de bande de roulement (1) inclut au moins une partie de gomme de base (41) positionnée au niveau d'un intérieur, dans la direction radiale de la roue, et une partie de gomme de chape (42) positionnée au niveau d'un extérieur de la partie de gomme de base (41), dans la direction radiale de la roue ; et
dans laquelle la au moins une partie de gomme de base (41) est disposée sur une surface périphérique externe du corps tubulaire externe (13), s'étendant au moins le long d'une direction radiale du corps tubulaire externe (13), et est positionnée entre des parties d'extrémité externes (21a, 22a) des éléments de raccordement (15) adjacents les uns aux autres dans la direction périphérique de la roue ;
**caractérisée en ce que** la rigidité de la partie de gomme de base (41) est inférieure à la rigidité de la partie de gomme de chape (42).

2. Roue non pneumatique (1) selon la revendication 1,
dans laquelle la partie de gomme de base (41) s'étend sur l'ensemble de la périphérie du corps tubulaire externe (13) ; et
dans laquelle au moins une partie de la au moins une partie de gomme de base (41), positionnée sur la surface périphérique externe du corps tubulaire externe (13), s'étend au moins le long de la direction radiale du corps tubulaire externe (13) et est positionnée entre les parties d'extrémité externes (21a, 22a) des éléments de raccordement (15) adjacents les uns aux autres dans la direction périphérique de la roue, et est plus épaisse que d'autres parties de la au moins une partie de gomme de base (41).

3. Roue non pneumatique (1) selon la revendication 1,
dans laquelle la dureté de la gomme Gb de la partie de gomme de base (41) est inférieure à la dureté du caoutchouc Gc de la partie de gomme de chape (42).

4. Roue non pneumatique (1) selon la revendication 2,
dans laquelle la dureté du caoutchouc Gb de la partie de gomme de base (41) est inférieure à la dureté du caoutchouc Gc de la partie de gomme de chape.

5. Roue non pneumatique (1) selon la revendication 3,
dans laquelle la dureté du caoutchouc Gb de la partie de gomme de base (41) et la dureté du caoutchouc Gc de la partie de gomme de chape (42) satisfont la relation de 30 < Gb < Gc < 80.

6. Roue non pneumatique (1) selon la revendication 4,
dans laquelle la dureté du caoutchouc Gb de la partie de gomme de base (41) et la dureté du caoutchouc Gc de la partie de gomme de chape (42) satisfont la relation de 30 < Gb < Gc < 80.

7. Roue non pneumatique (1) selon l'une quelconque des revendications 1 à 6,
dans laquelle le module d'élasticité Eb de la partie de gomme de base (41) est inférieur au module d'élasticité Ec de la partie de gomme de chape (42).

8. Roue non pneumatique (1) selon la revendication 7, dans laquelle le module d'élasticité Eb de la partie de gomme de base (41) et le module d'élasticité Ec de la partie de gomme de chape (42) satisfont la relation de 0,1 MPa < Eb < Ec < 100 MPa.
